(19) Europäisches Patentamt
European Patent Office
Office européen des brevets

(11) **EP 1 688 394 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(51) Int Cl.:
*C01G 1/02* [(2006.01)]     *C01G 25/00* [(2006.01)]
*C01G 25/02* [(2006.01)]     *C01B 13/34* [(2006.01)]
*C01B 13/20* [(2006.01)]     *B01J 23/10* [(2006.01)]
*B01J 37/08* [(2006.01)]     *C01F 17/00* [(2006.01)]
*B82Y 30/00* [(2011.01)]     *C09G 1/02* [(2006.01)]

(21) Anmeldenummer: **05025501.7**

(22) Anmeldetag: **23.11.2005**

(54) **Verfahren zur Herstellung von Metalloxidpulvern**

Method for making metal oxides

Procédé de préparation d'oxydes de métaux

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.02.2005 DE 102005005344**
**25.06.2005 DE 102005029542**

(43) Veröffentlichungstag der Anmeldung:
**09.08.2006 Patentblatt 2006/32**

(73) Patentinhaber: **Evonik Degussa GmbH**
**45128 Essen (DE)**

(72) Erfinder:
• **Katusic, Stipan**
**65779 Kelkheim (DE)**
• **Krämer, Michael**
**61137 Schöneck (DE)**
• **Kröll, Michael**
**63571 Gelnhausen (DE)**
• **Kress, Peter**
**63791 Karlstein (DE)**
• **Staab, Edwin**
**63826 Geiselbach (DE)**

(56) Entgegenhaltungen:
WO-A1-01/36332     WO-A2-2004/048261
DE-A1- 10 251 029

• H. S. KANG, Y. C. KANG, H. D. PARK, Y. G. SHUL: "Morphology of particles prepared by spray pyrolysis from organic precursor solution" MATERIALS LETTER, Bd. 57, Nr. 7, 2003, Seiten 1288-1294, XP002606577
• L. MÄDLER, W. J. STARK, S. E. PRATSINIS: "Flame-made ceria nanoparticles" JOURNAL OF MATERIALS RESEARCH, Bd. 17, Nr. 6, 2002, Seiten 1356-1362, XP002606578
• W. NIMMO, D. HIND, N. J. ALI, E. HAMPARTSOUMIAN AND S. J. MILNE: "The production of ultrafine zirconium oxide powders by spray pyrolysis" JOURNAL OF MATERIALS SCIENCE, Bd. 37, Nr. 16, 2002, Seiten 3381-3387, XP002606579

EP 1 688 394 B1

## Beschreibung

Die Erfindung betrifft ein Verfahren zur Herstellung von Metalloxidpulvern durch Spraypyrolyse. Die Erfindung betrifft weiterhin ein nach diesem Verfahren erhältliches Metalloxidpulver und dessen Verwendung.

Aus EP-A-1142830 ist bekannt, Metalloxidpulver durch Verbrennen eines Aerosols aus in organischen Lösungsmitteln gelösten, organischen Vorläufern zu erhalten. Das Aerosol kann dabei eine mittlere Tropfengröße von < 1 bis 500 $\mu$m aufweisen. Ein so hergestelltes Metalloxidpulver weist eine BET-Oberfläche von 1 bis 600 m$^2$/g auf. Nachteilig ist jedoch, dass die Metalloxidpulver oft eine breite Primärpartikelverteilung aufweisen. Weiterhin lassen sich die gegebenen Beispiele, in denen nur geringe Mengen an Produkt erhalten werden, nicht auf größere Mengen übertragen.

In WO2004/005184A1 wird ein Verfahren zur Herstellung von Metalloxiden beansprucht, bei dem aus einer Lösung Tröpfchen erzeugt und diese in einer Flamme oxidiert werden. Die Lösung enthält mindestens ein Ausgangsmaterial und mindestens 60%, bezogen auf die gesamte Lösung, einer Carbonsäure als Lösungsmittel. Die mittlere Tröpfchengröße beträgt 0,1 bis 100 $\mu$m, wobei kleinere Tröpfchen bevorzugt werden. Nachteilig bei dem Verfahren ist, dass es sich nicht zur Herstellung größerer Mengen eignet.

Aus WO01/36332A1 ist ein Verfahren zur Herstellung von Ceroxid bekannt. Dieses Verfahren beansprucht das Verbrennen eines Aerosols eines Ceroxidvorläufers in einer Hochtemperaturzone von 700 bis 1100 K, wobei die Tropfengröße des Aerosols kleiner als 100 $\mu$m sein muss. Aus der Beschreibung der Anmeldung geht weder der Einfluss der Tropfengröße hervor, noch werden in den Beispielen Werte für die Tröpfchengröße genannt. Zudem werden nach diesem Verfahren uneinheitliche Ceroxidpartikel unterschiedlicher Größe erhalten.

Man erhält ein Ceroxid bestehend aus einer Mischung von cenosphärischen und aciniformen Aggregaten. Die cenosphärischen Aggregate haben eine Teilchengrösse 1 bis 20 $\mu$m, die Primarpartikel eine durchschnittliche Grösse von kleiner 30 nm. Die aciniformen Aggregate haben eine haben eine durchschnittliche Grösse von kleiner 200 nm, wobei die Primärteilchen eine Grösse von 1 bis 30 nm besitzen. Die BET-Oberflache des Metalloxidpulvers betragt 35 bis 90 m$^2$/g.

In DE-A-10251029 wird ein pyrogen hergestelltes Ceroxidpulver offenbart, welches einen Grobanteil aus kristallinen, nicht aggregierten Partikeln mit einem mittleren Durchmesser zwischen 30 und 200 nm und - einen Feinanteil in Form von Aggregaten aus feinkristallinen, verwachsenen Primärpartikeln mit einem mittleren Aggregatdurchmesser von 5 bis 50 nm aufweist. Das Ceroxidpulver wird erhalten, indem man eine cerhaltige Lösung so zerstäubt, dass die resultierenden Flüssigkeitströpfchen einen Durchmesser von weniger als 200 $\mu$m aufweisen und diese in einem Wasserstoff/Sauerstoffgemisch verbrennt, wobei die Austrittsgeschwindigkeit der Flüssigkeitströpfchen aus der Zerstäubereinheit in den Reaktionsraum größer als 70 m/s ist, die Geschwindigkeit des Reaktionsgemisches im Reaktionsraum zwischen 0,5 und 2 m/s ist, und die Flamme einen Sauerstoffüberschuss, ausgedrückt als Lambda-Wert, von mindestens 1,6 aufweist.

H. S. Kang et al., offenbaren in "Materials Letter" 57(7) 2003, 1288-1294, ein Verfahren zur Herstellung von Metalloxiden durch Spraypyrolyse bei dem organische, polymere Precursoren eingesetzt werden um die Bildung von cenospharischen Teilchen zu vermeiden.

L. Mädler et al. offenbaren in "Journal of Materials Research" 17(6) 2002 1356-1362, ein Verfahren zur Herstellung eines Ceroxides mit hoher BET-Oberfläche durch Flammpyrolyse einer Lösung aus Ceracetat und Essigsaure unter besonderer Kontrolle der Sauerstoffverteilung und des Stoffstromes durch die Flamme. Der mittlere Tröpfchendurchmesser beträgt 7 bis 15 $\mu$m. Die erhaltenen Ceroxidpartikel haben eine Oberfläche von 30 bis 180 m$^2$/g.

W. NIMMO et al. offenbaren in "Journal of Materials Science" 37 (16) 2002, 3381-3387, dass bei der Spraypyrolyse von zirkonhaltigen Lösungen cenosphärische Zirkondioxid-Strukturen gebildet werden können. Sie führen dies aus auf die schlechte Kontrollierbarkeit bei der Verdüsung der Tröpfchen und der Löslichkeit der Salze auf der Oberfläche der Tröpfchen. Sie schlagen daher vor die Tröpfchengrössen auf 5 zur zu limitieren und größere Tröpfchen zu entfernen.

Aufgabe der Erfindung ist es, ein Verfahren zur Herstellung von Metalloxidpulvern bereitzustellen, mit dem ein einheitliches Pulver mit hoher BET-Oberfläche und enger Verteilung der Partikelgrößen erzielt werden kann, die Aggregate keine cenosphärische Struktur aufweisen, und welches zur Herstellung von Mengen im Bereich von kg/h geeignet ist.

Gegenstand der Erfindung ist ein Verfahren zur Herstellung eines Metalloxidpulvers mit einer BET-Oberfläche von mindestens 20 m$^2$/g durch Reaktion eines Aerosols mit Sauerstoff in einem Reaktionsraum bei einer Reaktionstemperatur von mehr als 700°C und anschließender Abtrennung des erhaltenen Pulvers von den gasförmigen Stoffen, wobei

- das Aerosol durch Verdüsen wenigstens eines Ausgangsmaterials, als solches in flüssiger Form oder in Lösung, und wenigstens eines Zerstäubungsgases mittels einer Mehrstoffdüse erhalten wird,
- der volumenbezogene, mittlere Tropfendurchmesser $D_{30}$ des Aerosols 30 bis 100 $\mu$m ist und
- die Anzahl der Aerosoltropfen, welche größer als 100 $\mu$m sind, bis zu 10% beträgt, bezogen auf die Gesamtanzahl der Tropfen.

Metalloxidpulver im Sinne der Erfindung umfassen auch Metallmischoxidpulver und dotierte Metalloxidpulver.

Unter einem Metallmischoxidpulver ist ein Pulver zu verstehen, bei dem eine innige Vermischung von Mischoxidkomponenten auf der Ebene von Primärpartikeln oder Aggregaten zu verstehen ist. Dabei können die Primärpartikel über Sauerstoff verbrückte Metallkomponenten in Form $M_1$-O-$M_2$-Bindungen aufweisen. Daneben können auch Bereiche einzelner Oxide $M_1O$, $M_2O$, $M_3O$,... in den Primärpartikeln vorliegen.

Unter einem dotierten Metalloxidpulver ist ein Pulver zu verstehen, bei dem die Dotierungskomponente vorwiegend oder ausschließlich auf einem Gitterplatz des Metalloxidgitters sitzt. Die Dotierungskomponente kann dabei in metallischer oder oxidischer Form vorliegen. Ein Beispiel für ein dotiertes Metalloxidpulver ist Indium-Zinnoxid, wo Zinnatome Plätze im Gitter des Indiumoxides besetzen.

Der volumenbezogene, mittlere Tropfendurchmesser $D_{30}$ errechnet sich nach :

$$D_{30} = \sqrt[3]{\frac{1}{N} \sum_{i=1}^{N} D_i^3}$$

Unter einem Ausgangsmaterial ist eine Metallverbindung zu verstehen, die unter den Reaktionsbedingungen in ein Metalloxid überführt wird. Bei dotierten Metalloxiden kann es möglich sein, dass das Ausgangsmaterial der Dotierungskomponente in eine metallische überführt wird.

Es wurde bei dem vorliegenden, erfindungsgemäßen Verfahren gefunden, dass es gelingt, hochoberflächige Metalloxidpulver herzustellen, indem der volumenbezogene, mittlere Tropfendurchmesser $D_{30}$ 30 bis 100 $\mu$m beträgt und gleichzeitig bis zu 10% der Tropfen absolut größer als 100 $\mu$m sind. Dadurch gelingt es, den Durchsatz an Lösung gegenüber dem Stand der Technik zu steigern, ohne eine merkliche Verringerung der BET-Oberflächen der Pulver hinnehmen zu müssen. Die BET-Oberfläche der nach dem erfindungsgemäßen Verfahren erhaltenen Pulver beträgt mindestens 20 m²/g, bevorzugt 20 bis 200 m²/g.

Die Bestimmung der absoluten Tropfengröße erfolgt nach dem Prinzip der dualen Phasen-Doppler-Anemometrie mit einem 5W Argon-Ionen-Dauerstrichlaser.

In einer bevorzugten Ausführungsform kann die Anzahl der Tropfen, bezogen auf die Gesamtanzahl der Tropfen, die größer als 100 $\mu$m sind, 3% bis 8% betragen.

Weiterhin kann es vorteilhaft sein, wenn der Prozentsatz der Tropfen, die größer als 250 $\mu$m sind, nicht mehr als 10%, bezogen auf die Anzahl der Tropfen > 100 $\mu$m, ist.

Insbesondere kann eine Ausführungsform vorteilhaft sein, bei der folgende Abhängigkeit des volumenbezogenen, mittleren Tropfendurchmesser $D_{30}$ von der Spraybreite des

| Aerosols gilt: | Spraybreite [mm] | $D_{30}$ [$\mu$m] |
|---|---|---|
| | 0 | 10 bis 30 |
| | ± 20 | 20 bis 40 |
| | ± 40 | 30 bis 60 |
| | ± 60 | 50 bis 80 |
| | ± 80 | 80 bis 120. |

Der Durchsatz einer Lösung, enthaltend ein Ausgangsmaterial kann bevorzugt 1,5 bis 2000 kg/h und besonders bevorzugt 100 bis 500 kg/h betragen.

Dabei kann der Gehalt des Ausgangsmaterials in der Lösung 2 bis 60, bevorzugt 5 bis 40 Gew.-%, betragen.

Die Metallkomponente des Ausgangsmaterials kann bevorzugt Al, Ce, Fe, Mg, In, Ti, Si, Sn, Y, Zn und/oder Zr sein. Siliciumdioxid soll im Sinne dieser Erfindung als Metalloxid gelten. Bevorzugt können Ausgangsmaterialien mit A1, Ce oder Zn sein.

Werden Ausgangsmaterialien mit unterschiedlichen Metallkomponenten eingesetzt, werden Metallmischoxidpulver erhalten. Dabei ist der Anteil eines bestimmten Ausgangsmaterials und damit der Anteil der entsprechenden Metalloxidkomponente im Metallmischoxidpulver nicht beschränkt.

Die Ausgangsmaterialien können metallorganischer und/oder anorganischer Natur sein, wobei metallorganische Verbindungen bevorzugt sein können. Beispiele anorganischer Ausgangsmaterialien können insbesondere Metallchloride und Metallnitrate sein. Als metallorganische Verbindungen können insbesondere Metallalkoholate und/oder Metallcarboxylate eingesetzt werden. Als Alkoholate können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Besonders vorteilhaft können 2-Ethlyhexanoate und/oder Laurate eingesetzt werden.

Die anorganischen Ausgangsverbindungen können bevorzugt in Wasser, die metallorganischen Ausgangsverbindungen in organischen Lösungsmitteln, gelöst vorliegen.

Als organische Lösungsmittel, beziehungsweise als Bestandteil von organischen Lösungsmittelgemischen, können bevorzugt Alkohole wie Methanol, Ethanol, n-Propanol, isoPropanol, n-Butanol oder tert.-Butanol, Diole wie Ethandiol, Pentandiol, 2-Methyl-2,4-pentandiol, Dialkylether wie Diethylether, tert.-Butyl-methylether oder Tetrahydrofuran, $C_1$-$C_{12}$-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure sein. Weiterhin können Essigsäureethylester, Benzol, Toluol, Naphtha und/oder Benzin eingesetzt werden. Bevorzugt können Lösungen eingesetzt werden, die $C_2$-$C_{12}$-Carbonsäuren enthalten, insbesondere 2-Ethylhexansäure und/oder Laurinsäure.

Bevorzugterweise liegt der Gehalt der $C_2$-$C_{12}$-Carbonsäuren in der Lösung bei weniger 60 Gew.-%, besonders bevorzugt bei weniger als 40 Gew.-%, bezogen auf die Gesamtmenge an Lösung.

In einer besonders bevorzugten Ausführungsform enthalten die Lösungen der Ausgangsmaterialien, gleichzeitig ein Carboxylat und die ihm zugrunde liegende Carbonsäure und/oder ein Alkoholat und den ihm zugrunde liegenden Alkohol. Insbesondere können als Ausgangsmaterialien die 2-Ethylhexanoate in einem Lösungsmittelgemisch eingesetzt werden, welches 2-Ethylhexansäure enthält.

Als Zerstäubungsgas kann bei dem erfindungsgemäßen Verfahren ein reaktives Gas wie Luft, mit Sauerstoff angereicherte Luft und/oder ein inertes Gas wie Stickstoff eingesetzt werden. In der Regel wird Luft als Zerstäubungsgas eingesetzt.

Für die Zerstäubungsgasmenge gilt nach dem erfindungsgemäßen Verfahren, dass das Verhältnis Durchsatz der Lösung des Ausgangsmaterials / Zerstäubungsgasmenge bevorzugt 2 bis 25 kg/Nm$^3$ und besonders bevorzugt 5 bis 10 kg/Nm$^3$ ist.

Als Mehrstoffdüse eignen sich für das erfindungsgemäße Verfahren insbesondere Dreistoffdüsen oder Vierstoffdüsen.

Bei Verwendung von Dreistoffdüsen oder Vierstoffdüsen können neben dem Zerstäubungsgas zwei, beziehungsweise drei getrennte Lösungen, die

- gleiche oder unterschiedliche Ausgangsmaterialien,
- in gleichen oder unterschiedlichen Lösungsmitteln,
- in gleicher oder unterschiedlicher Konzentration enthalten, zerstäubt werden.

So können beispielsweise zwei Lösungen mit unterschiedlichen Konzentrationen eines Ausgangsmaterials bei gleichem Lösungsmittel oder Lösungsmittelgemisch gleichzeitig zerstäubt werden. Dadurch werden Aerosoltropfen mit unterschiedlicher Größe erhalten.

Weiterhin kann beispielsweise das Zerstäubungsgas über zwei Düsen zugeführt werden oder es können unterschiedliche Zerstäubungsgase eingesetzt werden, beispielsweise Luft und Wasserdampf.

Getrennte Lösungen unterschiedlicher Ausgangsmaterialien können zur Herstellung von Mischoxidpulvern eingesetzt werden.

Die bei dem erfindungsgemäßen Verfahren notwendige Reaktionstemperatur von mehr als 700°C kann bevorzugt mittels einer durch Reaktion eines wasserstoffhaltigen Brenngases mit (Primär)-Luft, gegebenenfalls angereichert mit Sauerstoff, erzeugten Flamme, erhalten werden. Geeignete Brenngase können Wasserstoff, Methan, Ethan, Propan, Butan und/oder Erdgas sein, wobei Wasserstoff besonders bevorzugt ist. Als Reaktionstemperatur wird diejenige definiert, die sich 0,5 m unterhalb der Flamme einstellt.

Weiterhin kann es vorteilhaft sein, wenn zusätzlich Sekundärluft in den Reaktionsraum eingeleitet wird. In der Regel wird die Menge an Sekundärluft so bemessen sein, dass das Verhältnis von Sekundärluft zu Primärluft 0,1 bis 10 ist.

Es ist besonders vorteilhaft, wenn lambda ≥ 1,5 ist, wobei sich lambda errechnet aus dem Quotienten der Summe des Sauerstoffanteiles der eingesetzten Luft (Primärluft, Sekundärluft und Zerstäubungsluft), dividiert durch die Summe aus der Ausgangsmaterialien und des wasserstoffhaltigen Brenngases, jeweils in mol/h. Ganz besonders bevorzugt kann 2 < lambda < 5 sein.

Der Abtrennung des Pulvers aus dem Reaktionsgemisch geht in der Regel ein Abkühlprozess voraus. Dieser Prozess kann direkt, zum Beispiel mittels eines Quenchgases, oder indirekt, zum Beispiel über eine externe Kühlung, realisiert werden.

Das gemäß des erfindungsgemäßen Verfahrens erhältliche Metalloxidpulver kann dabei Verunreinigungen enthalten, die durch das Ausgangsmaterial und/oder den Prozess bedingt sind. Die Reinheit des geglühten Metalloxidpulvers beträgt mindestens 98 Gew.-%, in der Regel mindestens 99 Gew.-%. Besonders bevorzugt kann ein Gehalt von mindestens 99,8 Gew.-% sein.

In der Regel liegt das Metalloxidpulver überwiegend oder ausschließlich in Form von Aggregaten von Primärpartikeln vor, wobei die Aggregate keine cenosphärischen Strukturen aufweisen. Unter einer cenosphärischen Struktur im Sinne der Erfindung, ist eine zu verstehen, die eine Größe von 0,1 bis 20 $\mu$m aufweist und eine annähernd hohlkugelförmig, mit einer Wanddicke von 0,1 bis 2 $\mu$m, ist. Unter überwiegend ist zu verstehen, dass eine TEM-Aufnahme einzelne nicht aggregierte Partikel zeigt, deren Anteil nicht mehr als 10% beträgt.

Das Metalloxidpulver kann bevorzugt eine BET-Oberfläche von 30 bis 200 $m^2$/g aufweisen.

Der Grobanteil > 45 $\mu$m im Metalloxidpulver ist bevorzugt kleiner als 100 ppm und besonders bevorzugt kleiner als 50 ppm.

Das Metalloxidpulver weist bevorzugt einen Gehalt an Kohlenstoff von weniger als 0,15 Gew.-% und an Chlorid, Natrium und Kalium von weniger als 300 ppm auf.

Das Metalloxidpulver kann bevorzugt ein Ceroxidpulver mit einer BET-Oberfläche von 30 bis 90 $m^2$/g sein.

Weiterhin kann das Metalloxidpulver ein Ceroxidpulver sein, dessen isoelektrischer Punkt bei einem pH-Wert von 9 bis 11 liegt.

Das Ceroxidpulver kann, über einen Zeitraum von zwei Stunden an Luft und Temperaturen von 900°C ausgesetzt, eine BET-Oberfläche von bis zu 35 $m^2$/g aufweisen.

Der mittlere Primärpartikeldurchmesser des Ceroxidpulvers kann bevorzugt 5 bis 20 nm und besonders bevorzugt 8 bis 14 nm betragen.

Der mittlere Aggregatdurchmesser des Ceroxidpulvers kann 20 bis 100 nm und besonders bevorzugt 30 bis 70 nm betragen.

Das Metalloxidpulver kann zur Herstellung von Dispersionen, zum Polieren von Glas- und Metalloberflächen, als Katalysator und als Katalysatorträger verwendet werden.

**Beispiele**

Die spezifische Oberfläche wird bestimmt nach DIN 66131.

Die TEM-Aufnahmen werden mit einem Hitachi TEM-Gerät, Typ H-75000-2 erhalten. Mittels CCD-Kamera des TEM-Gerätes und anschließender Bildanalyse werden jeweils ca. 2000 Aggregate bezüglich der Primärpartikel- und Aggregatdurchmesser ausgewertet. Die Pulver werden dazu in Isopropanol/Wasser dispergiert (1 min, Ultraschallprozessor UP 100H, Dr. Hielscher GmbH, 100 W).

Der Gehalt an Partikeln, die größer als 45 $\mu$m sind, wird in Anlehnung an DIN EN ISO 787, Teil 18, bestimmt.

Das Zeta-Potentials wird im pH-Bereich 3-12 mittels der Elektrokinetischen Schallamplitude (ESA) bestimmt. Dazu wird eine Suspension mit 1 % Ceroxid hergestellt. Die Dispergierung erfolgt mit einem Ultraschall-Stab (400 W). Die Suspension wird mit einem Magnetrührer gerührt und über eine Schlauchpumpe durch den PPL-80 Sensor des ESA-8000 Geräts der Firma Matec gepumpt. Vom Ausgangs-pH-Wert startet die potentiometrische Titration mit 5m NaOH auf pH 12 . Die Rücktitration auf pH 4 wird mit 5m $HNO_3$ vorgenommen. Die Auswertung erfolgt mittels der Gerätesoftware Version pcava 5.94.

$$\zeta = \frac{ESA \cdot \eta}{\phi \cdot \Delta\rho \cdot c \cdot |G(\alpha)| \cdot \varepsilon \cdot \varepsilon_r}$$

mit

| | |
|---|---|
| $\xi$ | Zetapotential |
| $\phi$ | Volumenfraktion |
| $\Delta\rho$ | Dichtedifferenz zwischen Partikel und Flüssigkeit |
| c | Schallgeschwindigkeit in der Suspension |
| $\eta$ | Viskosität der Flüssigkeit |
| $\varepsilon$ | Dielektrizitätskonstante der Suspension |
| $|G(\alpha)|$ | Trägheitskorrektur) |

Der mittlere Partikelradius wird mittels dynamischer Lichtstreuung bestimmt (Horiba LB 500).

**Ausgangsmaterialien**

**Lösung A:** 42 Gew.-% Cer(III)ethylhexanoat, 25 Gew.-% 2-Ethylhexansäure, 4 Gew.-% 2-Methyl-2,4-pentandiol, Naphtha 29 Gew.-%.

**Lösung B:** 30 Gew.-% Cer(III)acetat Hydrat, 50 Gew.-% Essigsäure, 20 Gew.-% Laurinsäure.

**Lösung C:** 24,4 Zirkon(III)ethylhexanoat, 0,30 Gew.-% Hafnium(III)ethylhexanoat, 39,6 Gew.-% 2-Ethylhexansäure, 3,5 Gew.-% 2-(2-Butoxyethoxy)ethanol, 32,2 Gew.-% Testbenzin.

## Beispiel 1:

Aus den Teilströmen I: 200 kg/h der Lösung A, II: 50 kg/h der Lösung A und III: 17,3 $Nm^3$/h Zerstäubungsluft wird mittels einer Dreistoffdüse (Fa. Schlick, Modell 0/4 S41) ein Aerosol erzeugt, welches in einen Reaktionsraum zerstäubt wird. Hier brennt eine Knallgasflamme aus Wasserstoff (40 $Nm^3$/h) und Primärluft (1800 $Nm^3$/h), in der das Aerosol zur Reaktion gebracht wird. Zusätzlich werden Sekundärluft (3200 $Nm^3$/h) in den Reaktionsraum eingebracht. Nach Abkühlung wird das Ceroxidpulver an einem Filter von gasförmigen Stoffen abgetrennt. Die Verweilzeit des Reaktionsgemisches im Reaktionsraum beträgt 0,9 s. Die Temperatur 0,5 m unterhalb der Flamme beträgt 1100°C.

Die Beispiele 2 bis 4 werden analog Beispiel 1 durchgeführt. Dabei bleiben die Teilströme I und II gleich, während Teilstrom III, Durchsatz und Druck, erhöht werden.

Beispiel 5 wird analog Beispiel 1 durchgeführt, anstelle von Lösung A wird jedoch für den Teilstrom II die Lösung B eingesetzt.

Beispiel 6 wird analog Beispiel 1 durchgeführt, anstelle der Lösung A wird Lösung C eingesetzt.

Beispiel 7 wird analog Beispiel 1 durchgeführt, wobei der Teilstrom I aus Lösung A, der Teilstrom II aus Lösung C besteht.

Tabelle 1 zeigt die für die Aerosolerzeugung wesentlichen Parameter, Tabelle 2 zeigt die für die Flamme wesentlichen Parameter.

Tabelle 3 zeigt die analytischen Werte der erhaltenen Pulver.

Tabelle 4 zeigt die Tropfenverteilung in Prozent aller Tropfen >100$\mu$m der Beispiele 1 bis 4.

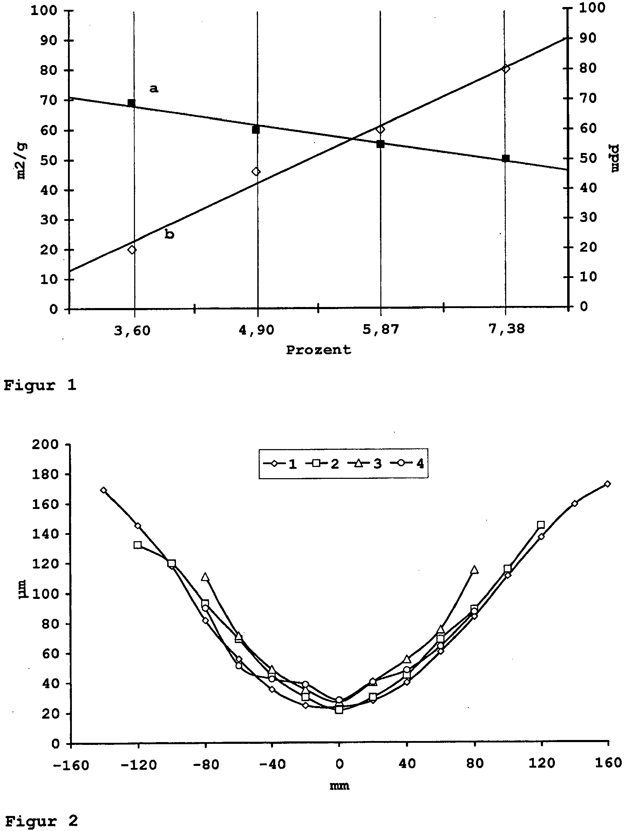

Figur 1 zeigt die Abhängigkeit der BET-Oberfläche(a) in $m^2$/g und der Partikel > 45 $\mu$m (b) vom Prozentsatz der Tropfen > 100 $\mu$m. Figur 1 zeigt die Relevanz des Anteiles der Tropfen > 100 $\mu$m auf die BET-Oberfläche und den Grobanteil > 45 $\mu$m. Das erfindungsgemäße Verfahren erlaubt die Herstellung großer Mengen an Metalloxidpulver mit hoher BET-Oberfläche und niedrigem Grobanteil, wobei BET-Oberfläche und Grobanteil über den Anteil an Tropfen > 100 $\mu$m eingestellt werden kann.

Figur 2 zeigt die $D_{30}$-Tropfendurchmesser [$\mu$m] der Pulver aus den Beispielen 1 bis 4 in $\mu$m in Abhängigkeit von der Spraybreite [mm]. Dabei werden $D_{30}$-Werte an den Rändern von bis zu 180 $\mu$m erhalten. Dennoch gelingt mit dem erfindungsgemäßen Verfahren die Herstellung feinteiliger Metalloxidpulver.

Die Ceroxidpulver der Beispiele 1 bis 5 weisen überraschenderweise einen isoelektrischen Punkt bei pH-Werten von 9 bis 11 auf. Üblicherweise liegt der isoelektrische Punkt von Ceroxid bei 6,5 bis 7,5. Der bei dem Ceroxidpulver höher liegende isoelektrische Punkt erlaubt die Herstellung stabiler Dispersionen bei pH-Werten zwischen 7 und 8,5. Solche Dispersionen sind insbesondere zum Polieren von $SiO_2$-Oberflächen geeignet.

### Tabelle 1: Aerosolerzeugung

| Beispiel | 1 | 2 | 3 | 4 | 5 | 6 | 7 |
|---|---|---|---|---|---|---|---|
| Teilstrom I Lösung Fluß [kg/h] | A 50,0 | A 50,0 | A 50,0 | A 50,0 | A 50,0 | C 50,0 | A 70 |
| Teilstrom II Lösung Fluß [kg/h] | A 200,0 | A 200,0 | A 200,0 | A 200,0 | B 200,0 | C 200,0 | C 170 |
| Teilstrom III Zerstäubungsluft [$Nm^3$/h] | 17,3 | 28,0 | 35,8 | 42,9 | 17,3 | 17,3 | 17,3 |
| Druck [barÜ] Teilstrom I Teilstrom II Teilstrom III | 0,4 4,3 0,5 | 0,4 4,3 1,0 | 0,4 4,3 1,5 | 0,4 4,3 2,0 | 0,4 4,3 0,5 | 0,4 4,3 0,5 | 0,4 4,3 0,5 |
| Tropfen Gesamtanzahl Durchmesser | 598864 | 539612 | 414543 | 381120 | 598812 | 598235 | 539009 |

(fortgesetzt)

| Beispiel | 1 | 2 | 3 | 4 | 5 | 6 | 7 |
|---|---|---|---|---|---|---|---|
| < 100 μm | 92,62 | 94,13 | 95,10 | 98,94 | 92,81 | 92,15 | 91,60 |
| > 100 μm | 7,38 | 5,87 | 4,90 | 3,60 | 7,29 | 7,85 | 8,40 |

**Tabelle 2: Flammenparameter**

| Beispiel | 1 | 2 | 3 | 4 | 5 | 6 | 7 |
|---|---|---|---|---|---|---|---|
| Wasserstoff [Nm$^3$/h] | 40 | 40 | 40 | 40 | 40 | 40 | 45 |
| Primärluft [Nm$^3$/h] | 1800 | 1800 | 1800 | 1800 | 1800 | 1800 | 1800 |
| Sekundärluft [Nm$^3$/h] | 3200 | 3200 | 3200 | 3200 | 3200 | 3200 | 3300 |
| Zerstäubungsluft [Nm$^3$/h] | 17,3 | 28,0 | 35,8 | 42,9 | 17,3 | 17,3 | 17,3 |
| lambda | 2,63 | 2,64 | 2,64 | 2,64 | 2,63 | 2,63 | 2,65 |
| Verweilzeit [s] | 0,90 | 0,90 | 1,12 | 1,12 | 0,90 | 0,90 | 0,85 |
| Temperatur[a] [°C] | 1100 | 1020 | 1050 | 1050 | 1100 | 1100 | 1130 |
| a) Temperatur = 0,5 m unterhalb der Flamme | | | | | | | |

**Tabelle 3: Analytische Werte der erhaltenen Pulver**

| Beispiel | 1 | 2 | 3 | 4 | 5 | 6 | 7 |
|---|---|---|---|---|---|---|---|
| BET-Oberfläche [m$^2$/g] | 50 | 55 | 60 | 69 | 42 | 45 | 70 |
| Anteile >45μm [ppm] | 60 | 80 | 46 | 20 | 82 | 90 | 38 |
| C-Gehalt [Gew.%] | 0,08 | 0,08 | 0,09 | 0,09 | 0,11 | 0,13 | 0,07 |
| Cl-Gehalt [a] [ppm] | 225 | 251 | 161 | 242 | 261 | 184 | 192 |
| Na-Gehalt [a] [ppm] | 176 | 201 | 160 | 189 | 212 | 161 | 180 |
| K-Gehalt [a] [ppm] | 112 | 156 | 145 | 126 | 154 | 128 | 167 |
| mittlerer Primärpartikeldurchmesser [b] [nm] | 9,3 | 11,3 | 9,0 | 8,5 | - | 13,0 | 9,6 |
| mittlerer Aggregatdurchmesser[b] [nm] | 47,5 | 48,5 | 47,3 | 47,0 | - | 66,0 | 47,1 |
| mittlere Aggregatfläche [b] [nm$^2$] | 2410 | 2738 | 2312 | 2280 | - | 5228 | 4288 |
| a) laut ICP-Messung; b) bestimmt mittels Bildanalyse; | | | | | | | |

**Tabelle 4: Tropfenverteilung in % aller Tropfen >100μm**

| Beispiel | 1 | 2 | 3 | 4 |
|---|---|---|---|---|
| 100 - 150 μm | 7,14 | 11,17 | 18,00 | 25,39 |
| 151 - 200 μm | 42,09 | 48,67 | 56,42 | 37,23 |
| 201 - 250 μm | 45,64 | 33,25 | 23,33 | 33,34 |
| > 250 μm | 5,13 | 6,91 | 2,25 | 4,04 |

**Patentansprüche**

1. Verfahren zur Herstellung eines Metalloxidpulvers mit einer BET-Oberfläche von mindestens 20 m$^2$/g, durch Reaktion eines Aerosols mit Sauerstoff in einem Reaktionsraum bei einer Reaktionstemperatur von mehr als 700°C und anschließender Abtrennung des erhaltenen Pulvers von den gasförmigen Stoffen, wobei

- das Aerosol durch Verdüsen wenigstens eines Ausgangsmaterials, als solches in flüssiger Form oder in Lösung, und wenigstens eines Zerstäubungsgases mittels einer Mehrstoffdüse erhalten wird,
- der volumenbezogene, mittlere Tropfendurchmesser $D_{30}$ des Aerosols 30 bis 100 $\mu$m ist und
- die Anzahl der Aerosoltropfen, welche größer als 100 $\mu$m sind, bis zu 10% beträgt, bezogen auf die Gesamtanzahl der Tropfen.

2. Verfahren nach Anspruch 1, **dadurch gekennzeichnet, dass** die Anzahl der Tropfen, bezogen auf die Gesamtanzahl der Tropfen, die größer als 100 $\mu$m sind, 3% bis 8% beträgt.

3. Verfahren nach den Ansprüchen 1 oder 2, **dadurch gekennzeichnet, dass** der Prozentsatz der Tropfen, die größer als 250 $\mu$m sind, nicht mehr als 10%, bezogen auf die Anzahl der Tropfen > 100 $\mu$m, ist.

4. Verfahren nach den Ansprüchen 1 bis 3, **dadurch gekennzeichnet, dass** für den volumenbezogenen, mittleren Tropfendurchmesser $D_{30}$ [$\mu$m] in Abhängigkeit von der Spraybreite [mm] des Aerosols gilt:

| Spraybreite | $D_{30}$ |
|---|---|
| 0 | 10 bis 30 |
| $\pm$ 20 | 20 bis 40 |
| $\pm$ 40 | 30 bis 60 |
| $\pm$ 60 | 50 bis 80 |
| $\pm$ 80 | 80 bis 120 |

5. Verfahren nach den Ansprüchen 1 bis 4, **dadurch gekennzeichnet, dass** der Durchsatz einer Lösung enthaltend ein Ausgangsmaterial 1,5 bis 2000 kg/h ist.

6. Verfahren nach den Ansprüchen 1 bis 5, **dadurch gekennzeichnet, dass** der Metallgehalt des Ausgangsmaterials in der Lösung 2 bis 40 Gew.-% beträgt.

7. Verfahren nach den Ansprüchen 1 bis 6, **dadurch gekennzeichnet, dass** die Metallkomponente des Ausgangsmaterials Al, Ce, Fe, Mg, In, Ti, Si, Sn, Y, Zn und/oder Zr ist.

8. Verfahren nach den Ansprüchen 1 bis 7, **dadurch gekennzeichnet, dass** das Ausgangsmaterial eine metallorganische Verbindung ist.

9. Verfahren nach den Ansprüchen 1 bis 8, **dadurch gekennzeichnet, dass** das Ausgangsmaterial in einem organischen Lösungsmittel gelöst ist.

10. Verfahren nach Anspruch 9, **dadurch gekennzeichnet, dass** die Lösung als Lösungsmittel mindestens eine Carbonsäure mit 2 bis 12 Kohlenstoffatomen enthält.

11. Verfahren nach Anspruch 10, **dadurch gekennzeichnet, dass** der Gehalt der Carbonsäuren mit 2 bis 12 Kohlenstoffatomen in der Lösung kleiner als 60 Gew.-% ist.

12. Verfahren nach den Ansprüchen 1 bis 11, **dadurch gekennzeichnet, dass** das Zerstäubungsgas Luft ist.

13. Verfahren nach den Ansprüchen 1 bis 12, **dadurch gekennzeichnet, dass** das Verhältnis Durchsatz der Lösung des Ausgangsmaterials/ Zerstäubungsgasmenge 2 bis 25 kg/Nm$^3$ ist.

14. Verfahren nach den Ansprüchen 1 bis 13, **dadurch gekennzeichnet, dass** die Mehrstoffdüse eine Dreistoffdüse oder Vierstoffdüse ist.

15. Verfahren nach Anspruch 14, **dadurch gekennzeichnet, dass** mittels der Dreistoffdüse oder Vierstoffdüse neben dem Zerstäubungsgas zwei beziehungsweise drei getrennte Lösungen, die

- gleiche oder unterschiedliche Ausgangsmaterialien,
- in gleichen oder unterschiedlichen Lösungsmitteln,
- in gleicher oder unterschiedlicher Konzentration enthalten, zerstäubt werden.

**16.** Verfahren nach den Ansprüchen 1 bis 15, **dadurch gekennzeichnet, dass** die Reaktionstemperatur mittels einer durch Reaktion eines wasserstoffhaltigen Brenngases mit Sauerstoff und/oder Luft erzeugten Flamme, erhalten wird.

**17.** Verfahren nach den Ansprüchen 16, **dadurch gekennzeichnet, dass** zusätzlich Sekundärluft in den Reaktionsraum eingeleitet wird.

**18.** Verfahren nach Anspruch 16 oder 17, **dadurch gekennzeichnet, dass** lambda $\geq$ 1,5 ist, wobei sich lambda errechnet aus dem Quotienten der Summe des Sauerstoffanteiles der Luft sowie ggf. des Zerstäubungsgases und der Summe aus der Ausgangsmaterialien sowie des wasserstoffhaltigen Brenngases, jeweils in mol/h.

**Claims**

**1.** Process for the production of a metal oxide powder having a BET surface area of at least 20 m$^2$/g, by reacting an aerosol with oxygen in a reaction space at a reaction temperature of more than 700°C and then separating the resulting powder from the gaseous substances, wherein

- the aerosol is obtained by using a multi-component nozzle to atomize at least one starting material, either as such in liquid form or in solution, and at least one atomizing gas,
- the volume mean droplet diameter $D_{30}$ of the aerosol is from 30 to 100 $\mu$m, and
- the number of aerosol droplets greater than 100 $\mu$m is up to 10%, based on the total number of droplets.

**2.** Process according to Claim 1, **characterized in that** the number of droplets greater than 100 $\mu$m is from 3% to 8%, based on the total number of droplets.

**3.** Process according to Claim 1 or 2, **characterized in that** the percentage of droplets greater than 250 $\mu$m is not more than 10%, based on the number of droplets > 100 $\mu$m.

**4.** Process according to Claims 1 to 3, **characterized in that** the volume mean droplet diameter $D_{30}$ [$\mu$m] depends on the spray width [mm] of the aerosol as follows:

| spray width | $D_{30}$ |
|---|---|
| 0 | 10 to 30 |
| $\pm$ 20 | 20 to 40 |
| $\pm$ 40 | 30 to 60 |
| $\pm$ 60 | 50 to 80 |
| $\pm$ 80 | 80 to 120 |

**5.** Process according to Claims 1 to 4, **characterized in that** the throughput of a solution containing a starting material is from 1.5 to 2000 kg/h.

**6.** Process according to Claims 1 to 5, **characterized in that** the metal content of the starting material in the solution is from 2 to 40 wt.%.

**7.** Process according to Claims 1 to 6, **characterized in that** the metal component of the starting material is Al, Ce, Fe, Mg, In, Ti, Si, Sn, Y, Zn and/or Zr.

**8.** Process according to Claims 1 to 7, **characterized in that** the starting material is an organometallic compound.

**9.** Process according to Claims 1 to 8, **characterized in that** the starting material is in a dissolved state in an organic solvent.

**10.** Process according to Claim 9, **characterized in that** the solution contains at least one carboxylic acid having from 2 to 12 carbon atoms as solvent.

**11.** Process according to Claim 10, **characterized in that** the content level of carboxylic acids having from 2 to 12 carbon atoms in the solution is less than 60 wt.%.

**12.** Process according to Claims 1 to 11, **characterized in that** the atomizing gas is air.

**13.** Process according to Claims 1 to 12, **characterized in that** the ratio for throughput of the solution of the starting material/amount of atomizing gas is from 2 to 25 kg/standard $m^3$.

**14.** Process according to Claims 1 to 13, **characterized in that** the multi-component nozzle is a three-component nozzle or a four-component nozzle.

**15.** Process according to Claim 14, **characterized in that** the three-component nozzle or the four-component nozzle is used to atomize, in addition to the atomizing gas, two or, respectively, three separate solutions which contain

- the same or different starting materials,
- in the same or different solvents,
- in the same or different concentrations.

**16.** Process according to Claims 1 to 15, **characterized in that** the reaction temperature is obtained by means of a flame produced by reaction of a hydrogen-containing combustible gas with oxygen and/or air.

**17.** Process according to Claim 16, **characterized in that** secondary air is additionally introduced into the reaction space.

**18.** Process according to Claim 16 or 17, **characterized in that** lambda is $\geq 1.5$, lambda being calculated from the quotient of the sum of the oxygen content of the air and also, where applicable, of the atomizing gas, divided by the sum of the starting materials and the hydrogen-containing combustible gas, in each case in mol/h.

**Revendications**

**1.** Procédé pour la préparation d'une poudre d'oxyde de métal présentant une surface BET d'au moins 20 $m^2$/g, par réaction d'un aérosol avec de l'oxygène dans une chambre de réaction à une température de réaction de plus de 700°C et séparation consécutive de la poudre obtenue des substances gazeuses,

- l'aérosol étant obtenu par atomisation d'au moins un matériau de départ, tel quel sous forme liquide ou en solution, et d'au moins un gaz de vaporisation au moyen d'un gicleur à plusieurs substances,
- le diamètre moyen $D_{30}$ des gouttes, par rapport au volume valant 30 à 100 $\mu$m et
- le nombre de gouttes d'aérosol, qui sont supérieures à 100 $\mu$m, étant de jusqu'à 10%, par rapport au nombre total de gouttes.

**2.** Procédé selon la revendication 1, **caractérisé en ce que** le nombre de gouttes d'aérosol qui sont supérieures à 100 $\mu$m, par rapport au nombre total de gouttes, est de 3% à 8%.

**3.** Procédé selon les revendications 1 ou 2, **caractérisé en ce que** le pourcentage de gouttes qui sont supérieures à 250 $\mu$m, n'est pas supérieur à 10%, par rapport au nombre de gouttes > 100 $\mu$m.

**4.** Procédé selon les revendications 1 à 3, **caractérisé en ce que** pour le diamètre moyen $D_{30}$ [$\mu$m] de goutte par rapport au volume, en fonction de la largeur de pulvérisation [mm] de l'aérosol :

| Largeur de pulvérisation | $D_{30}$ |
|---|---|
| 0 | 10 à 30 |
| $\pm$ 20 | 20 à 40 |
| $\pm$ 40 | 30 à 60 |

(suite)

| Largeur de pulvérisation | $D_{30}$ |
|---|---|
| ± 60 | 50 à 80 |
| ± 80 | 80 à 120 |

**5.** Procédé selon les revendications 1 à 4, **caractérisé en ce que** le débit d'une solution contenant un matériau de départ est de 1,5 à 2000 kg/h.

**6.** Procédé selon les revendications 1 à 5, **caractérisé en ce que** la teneur en métal du matériau de départ dans la solution est de 2 à 40% en poids.

**7.** Procédé selon les revendications 1 à 6, **caractérisé en ce que** le composant métallique du matériau de départ est Al, Ce, Fe, Mg, In, Ti, Si, Sn, Y, Zn et/ou Zr.

**8.** Procédé selon les revendications 1 à 7, **caractérisé en ce que** le matériau de départ est un composé métallo-organique.

**9.** Procédé selon les revendications 1 à 8, **caractérisé en ce que** le matériau de départ est dissous dans un solvant organique.

**10.** Procédé selon la revendication 9, **caractérisé en ce que** la solution contient, comme solvant, au moins un acide carboxylique comprenant 2 à 12 atomes de carbone.

**11.** Procédé selon la revendication 10, **caractérisé en ce que** la teneur en acides carboxyliques comprenant 2 à 12 atomes de carbone dans la solution est inférieure à 60% en poids.

**12.** Procédé selon les revendications 1 à 11, **caractérisé en ce que** le gaz de vaporisation est l'air.

**13.** Procédé selon les revendications 1 à 12, **caractérisé en ce que** le rapport débit de la solution de matériau de départ/quantité de gaz de vaporisation vaut 2 à 25 kg/Nm$^3$.

**14.** Procédé selon les revendications 1 à 13, **caractérisé en ce que** le gicleur à plusieurs substances est un gicleur à trois ou à quatre substances.

**15.** Procédé selon la revendication 14, **caractérisé en ce qu'**on vaporise au moyen du gicleur à trois ou à quatre substances, outre le gaz de vaporisation, respectivement deux ou trois solutions séparées, qui contiennent

- des matériaux de départ identiques ou différents,
- dans des solvants identiques ou différents,
- en des concentrations identiques ou différentes.

**16.** Procédé selon les revendications 1 à 15, **caractérisé en ce que** la température de réaction est obtenue au moyen d'une flamme générée par une réaction d'un gaz combustible contenant de l'hydrogène avec de l'oxygène et/ou de l'air.

**17.** Procédé selon la revendication 16, **caractérisé en ce qu'**en outre, de l'air secondaire est introduit dans la chambre de réaction.

**18.** Procédé selon la revendication 16 ou 17, **caractérisé en ce que** lambda est ≥ 1,5, où lambda est calculé à partir du quotient de la somme de la proportion d'oxygène de l'air ainsi que le cas échéant du gaz de vaporisation et de la somme des matériaux de départ ainsi que du gaz combustible contenant de l'hydrogène, à chaque fois en mole/h.

Figur 1

Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1142830 A
- WO 2004005184 A1
- WO 0136332 A1
- DE 10251029 A

**In der Beschreibung aufgeführte Nicht-Patentliteratur**

- **H. S. KANG et al.** *Materials Letter,* 2003, vol. 57 (7), 1288-1294
- **L. MÄDLER et al.** *Journal of Materials Research,* 2002, vol. 17 (6), 1356-1362
- **W. NIMMO et al.** *Journal of Materials Science,* 2002, vol. 37 (16), 3381-3387